# EUROPEAN PATENT APPLICATION

(11) **EP 1 031 821 A1**
(43) Date of publication of application: **30.08.2000**
(21) Application number: 00200425.7
(22) Date of filing: 09.02.2000
(51) Int. Cl.: G01F 1/684

(54) **Micromachined mass flow sensor with ambient temperature sensor**

(30) Priority: 26.02.1999 GB 9904428
(71) Applicant: Delphi Technologies, Inc., Troy, MI 48007 (US)
(72) Inventor: Hoffmann, Guy, 5240 Sandweiler (LU); Weyand, Peter, 8064 Bertrange (LU)
(74) Representative: Denton, Michael John

(57) **Abstract**

A mass flow sensor (10) comprising a silicon substrate (12) which is substantially annular and defines a recess (14) having an upstream edge (20) and a downstream edge (20); a membrane layer (16) secured to the silicon substrate and extending across the recess; a heating element (18) mounted on or in the membrane layer and positioned substantially centrally relative to the upstream and downstream edges of the recess; and an ambient sensor element (24) mounted on or in the membrane layer and positioned closely adjacent to, or overlapping, each of the upstream edge and the downstream edge of the recess. Reduces the influence of temperature gradients associated with the substrate.

## Description

### Technical Field

The present invention relates to a mass flow sensor having an ambient temperature sensor.

### Background of the Invention

A known mass flow sensor is described in US-A-5705745. This known mass flow sensor comprises a silicon substrate having a recess therein, a membrane layer extending across the recess, and a heating element mounted on or in the membrane layer substantially centrally relative to the recess. Temperature measuring elements are position upstream and downstream of the heating element, between the heating element and the edges of the recess. The variable resistance of the upstream and downstream sensors is a direct measure for the membrane temperature and can be calibrated against air flow velocity across the membrane and flow direction. The heating element is usually connected in a bridge circuit with an ambient temperature sensor. The heating element is controlled at over-temperatures to compensate for non-linearities in temperature coefficients of the sensor components due to changes in ambient temperature. The signal from the mass flow sensor is therefore proportional to the temperature difference between the ambient sensor and the heating element. Rapid changes in air flow velocity across the membrane can create temperature gradients across the membrane and the substrate. If the ambient sensor is mounted on the substrate, such temperature gradients can affect the ambient sensor signal, and hence generate inaccurate signals from the mass flow sensor.

### Summary of the Invention

The present invention seeks to overcome the above problem.

A mass flow sensor in accordance with the present invention comprises a silicon substrate which is substantially annular and defines a recess having an upstream edge and a downstream edge; a membrane layer secured to the silicon substrate and extending across the recess; a heating element mounted on or in the membrane layer and positioned substantially centrally relative to the upstream and downstream edges of the recess; and an ambient sensor element mounted on or in the membrane layer and positioned closely adjacent to, or overlapping, each of the upstream edge and the downstream edge of the recess.

The positioning of the ambient sensor elements relative to the upstream and downstream edges of the recess significantly reduces the influence of temperature gradients associated with the substrate.

### Brief Description of the Drawings

The present invention will now be described, by way of example, with reference to the accompanying drawings, in which:-
Figure 1 is a cross-sectional view of a mass flow sensor in accordance with the present invention;
Figure 2 is a plan view of the mass flow sensor of Figure 1;
Figure 3 is a line drawing of the layout of the ambient sensor element and the recess of the mass flow sensor of Figures 1 and 2; and
Figures 4 to 10 are line drawings of alternative layouts of the ambient sensor element(s) and the recess of alternative embodiments of mass flow sensor in accordance with the present invention.

### Description of the Preferred Embodiment

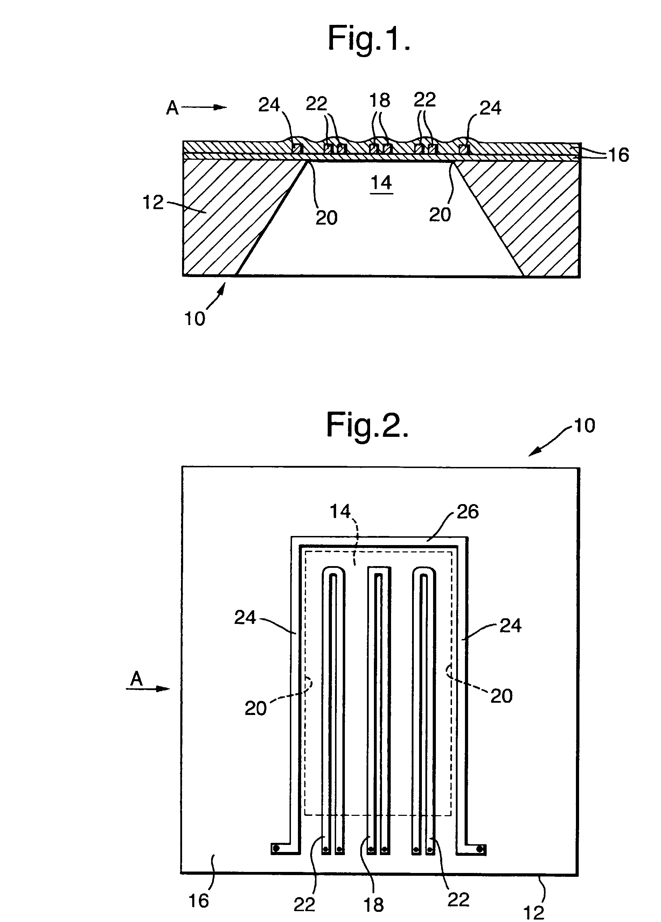

Referring to Figures 1 to 3, the present invention is a mass flow sensor 10 for monitoring the mass flow in a direction A across the sensor. The mass flow sensor 10 comprises a silicon substrate 12 which is substantially annular and defines a recess 14. A membrane layer 16 is secured to the substrate and extends across the recess 14. A heating element 18 is mounted on or in the membrane layer 16 substantially centrally relative to upstream and downstream edges 20 of the recess 14. Upstream and downstream temperature measuring elements 22 may also be positioned on or in the membrane layer 16 between the heating element 18 and the upstream and downstream edges 20 of the recess 14.

In accordance with the present invention, an ambient sensor element 24 of an ambient sensor is also positioned on or in the membrane layer 16 closely adjacent to, or overlapping, the upstream edge and the downstream edge 20 of the recess 14. The ambient sensor elements 24 are preferably symmetrically arranged relative to the upstream and downstream edges 20 of the recess 14.

In the embodiment of Figures 1 to 3, each ambient sensor element 24 is positioned along the radially outer side of the upstream edge and the downstream edge 20 of the recess 14, with the ambient sensor elements being electrically connected in series by a conductor 26 also positioned on or in the membrane layer 16.

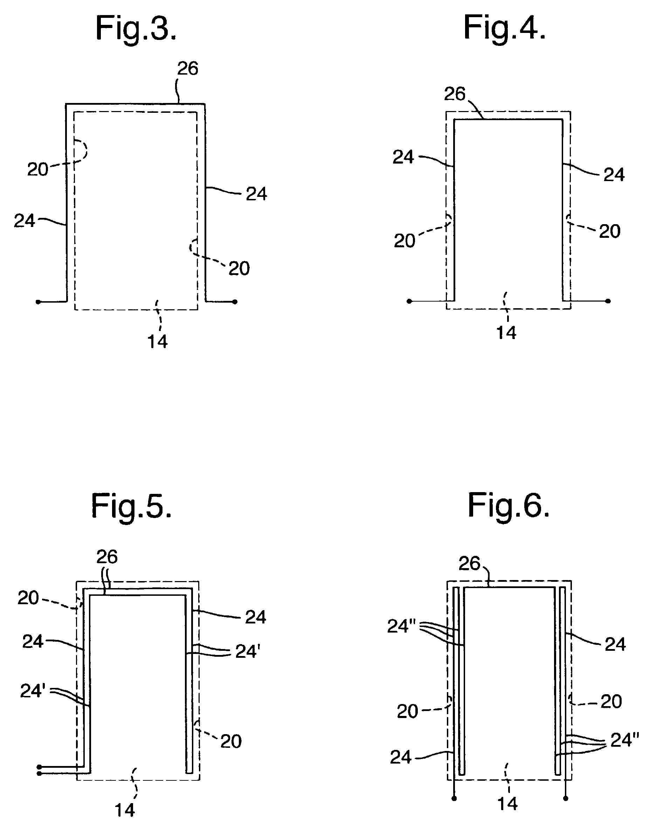

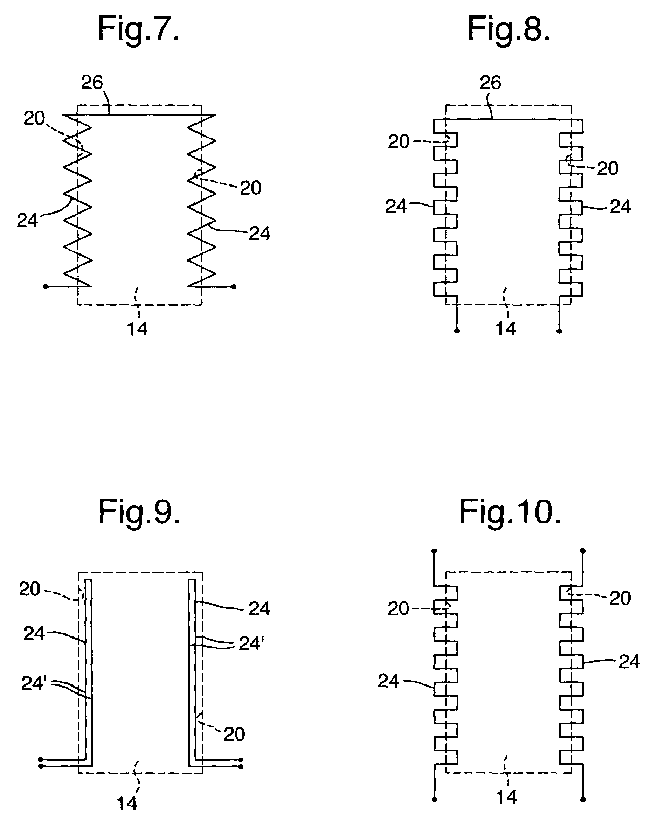

Various alternative arrangements for the ambient sensor elements are shown in Figures 4 to 10. The arrangement of Figure 4 is substantially similar to that of Figure 3, except that the ambient sensor elements 24 are positioned along the radially inner side of the upstream edge and the downstream edge 20 of the recess 14. In Figure 5, which is similar to the arrangement of Figure 4, each ambient sensor element 24 comprises a pair of elements 24' which extend substantially parallel to one another and which are electrically connected in series. Figure 6 shows a similar arrangement to Figure 5 but in which each ambient sensor element 24 comprises three elements 24'' which extend substantially parallel to one another and which are electrically connected in series. In Figures 7 and 8, each ambient sensor element 24 has a path which extends along and crosses the upstream or downstream edge 20 of the recess 14, with each element having a zigzag path in Figure 7 and a castellated path in Figure 8. As a further alternative to the arrangements of Figures 7 and 8, the ambient sensor elements may have a sinusoidal path. In Figures 9 and 10, the ambient sensor elements 24 are electrically isolated from one another on the mass flow sensor. In Figure 9, each ambient sensor element 24 comprises a pair of elements 24' which are substantially parallel to one another and electrically connected in series, with the elements 24 positioned along the radially inner side of the upstream edge and the downstream edge 20 of the recess 14. In Figure 10, each ambient sensor element 24 has a castellated path which extends along and crosses the upstream or downstream edge 20 of the recess 14.

With the present invention, the influence of the substrate temperature on the ambient sensor is substantially avoided by placing the ambient sensor elements on the membrane at the upstream and downstream edges of the recess in the substrate. As a consequence, the output signal from the mass flow sensor is not influenced by temperature gradients associated with the substrate because such gradients have little or no effect on the ambient sensor.

## Claims

1. A mass flow sensor (10) comprising a silicon substrate (12) which is substantially annular and defines a recess (14) having an upstream edge (20) and a downstream edge (20); a membrane layer (16) secured to the silicon substrate and extending across the recess; a heating element (18) mounted on or in the membrane layer and positioned substantially centrally relative to the upstream and downstream edges of the recess; and an ambient sensor element (24) mounted on or in the membrane layer and positioned closely adjacent to, or overlapping, each of the upstream edge and the downstream edge of the recess.

2. A mass flow sensor as claimed in Claim 1, wherein the ambient sensor elements (24) are symmetrically arranged relative to the upstream and downstream edges (20) of the recess (14).

3. A mass flow sensor as claimed in Claim 1 or Claim 2, wherein each ambient sensor element (24) is positioned to extend along the radially outer side of the upstream edge (20) and the downstream edge (20) of the recess (14).

4. A mass flow sensor as claimed in Claim 1 or Claim 2, wherein each ambient sensor element (24) is positioned to extend along the radially inner side of the upstream edge (20) and the downstream edge (20) of the recess (14).

5. A mass flow sensor as claimed in Claim 3 or Claim 4, wherein each ambient sensor element (24) comprises two or more elements (24',24'') which extend substantially parallel to one another and which are electrically connected in series.

6. A mass flow sensor as claimed in Claim 1 or Claim 2, wherein each ambient sensor element (24) has a zigzag path which extends along and crosses the upstream edge (20) and the downstream edge (20) of the recess (14).

7. A mass flow sensor as claimed in Claim 1 or Claim 2, wherein each ambient sensor element (24) has a castellated path which extends along and crosses the upstream edge (20) and the downstream edge (20) of the recess (14).

8. A mass flow sensor as claimed in any one of Claims 1 to 7, wherein the ambient sensor elements (24) are electrically connected in series by a conductor (26) mounted on or in the membrane layer (16).

9. A mass flow sensor as claimed in any one of Claims 1 to 7, wherein the ambient sensor elements (24) are electrically isolated on the mass flow sensor (10).

10. A mass flow sensor as claimed in any one of Claims 1 to 9, wherein a temperature measuring element (22) is positioned on or in the membrane layer (18) between the heating element (18) and each of the ambient sensor elements (24).
